# EUROPEAN PATENT APPLICATION

(11) **EP 4 851 469 A1**
(43) Date of publication of application: **09.12.2026**
(21) Application number: 24921128.5
(22) Date of filing: 05.03.2024
(51) Int. Cl.: F16B 45/00, B65D 25/20

(54) **MOUNTING STRUCTURE AND STORAGE SYSTEM**

(30) Priority: 30.01.2024 CN 202410133378
(71) Applicant: Hangzhou Great Star Industrial Co., Ltd., Hangzhou, Zhejiang 310002 (CN)
(72) Inventor: LI, Jingjian, Hangzhou, Zhejiang 310002 (CN)
(74) Representative: Petraz, Gilberto Luigi
(86) International application number: PCT/CN2024/080006
(87) International publication number: WO 2025/161082

(57) **Abstract**

A mounting structure (100) and a storage system (200) are provided. The mounting structure (100) is configured to be mounted on a load-bearing structure (200). The mounting structure (100) includes a connecting member (10) a mating member (20). The mating member (20) is connected to the load-bearing structure (200) via the connecting member (10), and configured to carry a to-be-mounted article. According to the present application, connecting members (10) matching different load-bearing structures (200) can be customized according to different usage requirements, thereby conveniently connecting the mating member (20) to the load-bearing structure (200) via the connecting member (10), effectively improving the connection convenience and functional flexibility of the mounting structure (100).

## Description

### CROSS-REFERENCE TO RELATED APPLICATION

This application claims priority to Chinese patent application No. 202410133378.2, filed on January 30, 2024, and titled "MOUNTING STRUCTURE AND STORAGE SYSTEM". The content of the above identified application is hereby incorporated herein in its entirety by reference.

### TECHNICAL FIELD

The present application relates to the technical field of storage tools, and in particular, to a mounting structure and a storage system.

### BACKGROUND

Conventional hook-type hanging structures are typically directly adhered to load-bearing structures such as walls. Such hook-type hanging structures have a single connection method and insufficient functional flexibility, and thus the hook-type hanging structures may be inconvenient to be flexibly connected to load-bearing structures of different configurations, and difficult to be replaced as required.

### SUMMARY

According to various embodiments of the present application, a mounting structure and a storage system are provided.

A mounting structure is provided, and the mounting structure is configured to be mounted on a load-bearing structure. The mounting structure includes a connecting member and a mating member. The mating member is connected to the load-bearing structure via the connecting member, and configured to carry a to-be-mounted article.

Details of one or more embodiments of the present application are presented in the attached drawings and descriptions below. Other features, purposes, and advantages of the present application will become apparent from the description, drawings, and claims.

### BRIEF DESCRIPTION OF THE DRAWINGS

For a better description and illustration of embodiments and/or examples of the inventions disclosed herein, reference may be made to one or more accompanying drawings. Additional details or embodiments used to describe the drawings should not be considered as restricting the scope of any of the disclosed inventions, the presently described embodiments and/or examples, and the best mode of these inventions as presently understood.
FIG. 1 is a schematic diagram of a storage system according to the present application.
FIG. 2 is an enlarged schematic view of portion A in FIG. 1.
FIG. 3 is a schematic diagram of a first assembly method of a box body and a connecting member.
FIG. 4 is a schematic diagram of a second assembly method of a box body and a connecting member.
FIG. 5 is a side view of the connecting member in FIG. 4.
FIG. 6 is a side view of a mounting structure adapted for use with a belt.
FIG. 7 is an exploded view of a mounting structure according to an embodiment.
FIG. 8 is an exploded view of the mounting structure shown in FIG. 7 from another perspective.
FIG. 9 is a side view of a connecting member and a locking member in FIG. 7 during assembly.
FIG. 10 is an exploded view of FIG. 9.
FIG. 11 is a front view of a mounting structure according to an embodiment assembled with a tool bag.
FIG. 12 is an isometric view of the mounting structure shown in FIG. 11.
FIG. 13 is a schematic view of a mounting structure according to an embodiment.
FIG. 14 is a cross-sectional view along a line B-B in FIG. 13.
FIG. 15 is a side view of a mounting structure according to an embodiment.
FIG. 16 is a front view of a mounting structure according to an embodiment.
FIG. 17 is a cross-sectional view along a line C-C in FIG. 16.
FIG. 18 is an exploded view of a mounting structure according to an embodiment.
FIG. 19 is a schematic view of a mating member in FIG. 18.
FIG. 20 is a cross-sectional view along a line D-D in FIG. 19.
FIG. 21 is a front view of a connecting member 10 in FIG. 18.
FIG. 22 is a cross-sectional view along a line E-E in FIG. 21.
FIG. 23 is an exploded view of a mounting structure according to an embodiment.
FIG. 24 is an exploded view of a mounting structure according to an embodiment.
FIG. 25 is a schematic view of a mounting structure according to an embodiment.
FIG. 26 is a schematic view of a mounting structure according to an embodiment.
FIG. 27 is a schematic view of a mounting structure according to an embodiment.
FIG. 28 is an exploded view of a mounting structure according to an embodiment.
FIG. 29 is a schematic view of a mounting structure according to an embodiment.
FIG. 30 is a schematic view of a mounting structure according to an embodiment.
FIG. 31 is an exploded view of the mounting structure shown in FIG. 30.
FIG. 32 is a schematic view of a mounting structure according to an embodiment.
FIG. 33 is a schematic view of a mounting structure according to an embodiment.
FIG. 34 is a schematic view of a mounting structure according to an embodiment.
FIG. 35 is a schematic view of a mounting structure according to an embodiment.
FIG. 36 is a schematic view of a functional portion in FIG. 35 when flipped.
FIG. 37 is an exploded view of the mounting structure in FIG. 35.
FIG. 38 is a schematic view of a mating member in FIG. 35.

In the drawings, 1 represents a storage system; 100 represents a mounting structure; 10 represents a connecting member; 11 represents a first mating structure; 111 represents a protruding portion; 112 represents a restricting flange; 12 represents a through hole; 13 represents a sliding groove; 14 represents a through slot; 15 represents a mounting surface; 16 represents a mating surface; 17 represents a snap-fit hook; 18 represents a mating hole; 191 represents a fixed portion; 192 represents a movable portion; 193 represents a locking portion; 20 represents a mating member; 21 represents a second mating structure; 201 represents a mating groove; 22 represents a third mating structure; 202 represents a clamping block; 203 represents a restricting hole; 211 represents a first groove opening; 212 represents a rim; 213 represents a second groove opening; 23 represents a mounting cavity; 231 represents a first opening; 232 represents a second opening; 24 represents a functional region; 25 represents an adapter portion; 251 represents a clamping assembly; 251a represents a clamping arm; 252 represents a mounting hole; 253 represents a front cover; 253a represents a first groove; 254 represents a rear cover; 254a represents a second groove; 255 represents a clamping groove; 256 represents a functional flat surface; 257 represents a mounting groove; 258 represents an interface; 26 represents a functional portion; 261 represents a clamping hook; 262 represents a lamp; 262a represents a hinge shaft; 263 represents a hanging hook; 264 represents a hanger; 265 represents a hook body; 266 represents a frame structure; 267 represents a tray; 268 represents a ball basket; 269 represents a sheet metal bracket; 27 represents a clearance notch; 30 represents a locking member; 31 represents a main body portion; 311 represents a restricting block; 312 represents a locking pin; 32 represents a protrusion; 321 represents a guiding inclined surface; 33 represents an auxiliary pushing block; 302 represents a second inclined surface; 331 represents a mating hook; 332 represents a first inclined surface; 34 represents a first elastic restoring member; 35 represents a blocking plate; 351 represents a perforation; 36 represents an actuating button; 361 represents an actuating inclined surface; 37 represents a blocking block; 38 represents a second elastic restoring member; 39 represents an elastic support member; 200 represents a load-bearing structure; 210 represents a load-bearing plate; 220 represents a guide rail; 221 represents a hanging structure; 222 represents a hooking portion; 223 represents a hole portion; 230 represents a hanging strip; 240 represents a box body; 250 represents a screw; 260 represents a positioning hole; 300 represents a to-be-mounted article; and 310 represents a tool bag.

### DETAILED DESCRIPTION

In order to make the above objects, features, and advantages of the present application more obvious and understandable, specific embodiments of the present application will be described in detail below with reference to the accompanying drawings. In the following description, many specific details are set forth in order to fully understand the present application. However, the present application can be implemented in many other ways different from those described herein, and those skilled in the art can make similar improvements without violating the connotation of the present application. Therefore, the present application is not limited by the specific embodiments disclosed below.

It should be noted that when a component is referred to as being "fixed to" or "provided on" another component, the component may be directly on the other component or an intermediate component may also exist. When a component is considered as being "connected to" another component, the component may be directly connected to the other component or an intermediate component may also exist at the same time. Terms such as "vertical", "horizontal", "upper", "lower", "left", "right" and other similar expressions used in the description of the present application are only for the purpose of illustration and do not represent the unique implementation.

Moreover, terms such as "first" and "second" are used for descriptive purposes only, which shall not be construed as indicating or implying relative importance or implicitly indicating the number of the indicated technical features. Therefore, a feature defined by "first" or "second" may include at least one of that feature either explicitly or implicitly. In the description of present application, "a plurality of" means at least two, such as two, three, etc., unless otherwise expressly defined.

In the present application, unless otherwise expressly specified and defined, a first feature "above" or "below" a second feature means that the first feature may be in direct contact with the second feature, or the first feature and the second feature may be in indirect contact through an intermediate medium. Moreover, the first feature is "on", "above", or "over" the second feature, it may mean that the first feature is directly above or obliquely above the second feature, or it just means that the first feature is higher in level than the second feature. The first feature is "below", "beneath", or "under" the second feature, it may mean that the first feature is directly below or obliquely below the second feature, or it just means that the first feature is lower in level than the second feature.

Unless otherwise defined, all technical and scientific terms used herein have the same meaning as commonly understood by one of ordinary skill in the art to which the present application belongs. The terms used herein in the description of the present application are for the purpose of describing specific embodiments only, and are not intended to limit the present application. As used herein, the term "and/or" means any and all combinations of one or more of the associated listed items.

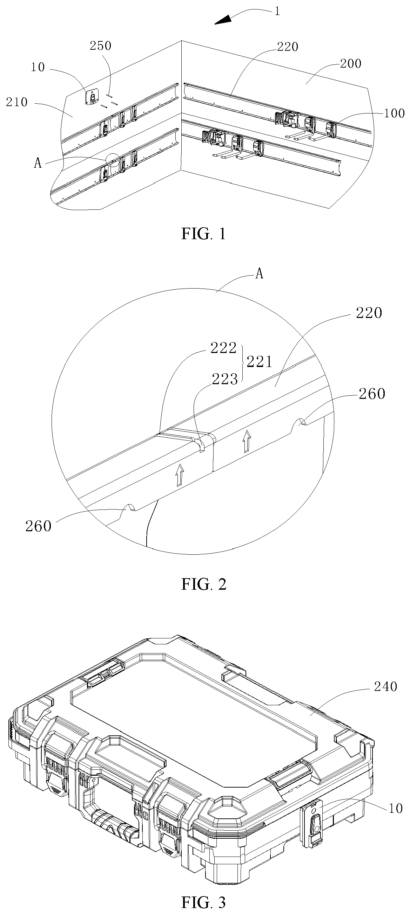

Referring to FIG. 1 to FIG. 6, the present application provides a mounting structure 100 configured to be mounted on a load-bearing structure 200. FIG. 1, FIG. 3 and FIG. 4 are schematic diagrams of assembly of the mounting structure 100 and the load-bearing structure 200, respectively. The mounting structure 100 includes a connecting member 10 and a mating member 20. The mating member 20 is connected to the load-bearing structure 200 via the connecting member 10, and the mating member 20 is configured to carry a to-be-mounted article. By providing the connecting member 10, the connecting member 10 matched with different load-bearing structures 200 can be customized according to different usage requirements, thereby facilitating the connection of the mating member to the load-bearing structures 200 via the connecting member 10.

In some embodiments, the mating member 20 is non-detachably connected to the connecting member 10.

In an embodiment, the mating member 20 and the connecting member 10 may be integrally formed. For example, the mating member 20 and the connecting member 10 may be integrally injection molded. Alternatively, the mating member 20 may be adhesively bonded to the connecting member 10. Alternatively, the mating member 20 may be riveted to the connecting member 10.

The mating member 20 may be detachably connected to the connecting member 10.

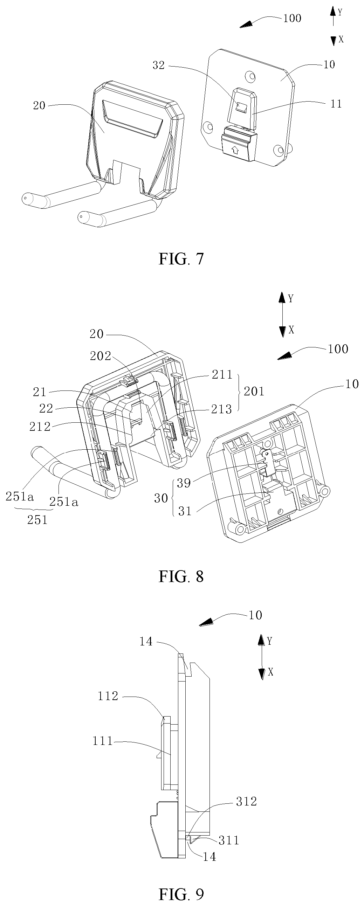

Next, referring to FIG. 7 to FIG. 10, the connecting member 10 may be provided with a first mating structure 11. The mating member 20 may be provided with a second mating structure 21. At least a portion of the second mating structure 21 may be pressed onto the first mating structure 11 along a gravity direction X to prevent the mating member 20 from being detached from the connecting member 10 along the gravity direction X. Under a weight of the mating member itself and a weight of the to-be-mounted article, the mating member 20 may be pressed onto the first mating structure 11, such that the mating member 20 can be securely connected to the connecting member 10 without being detached from the connecting member 10 along the gravity direction X.

In an embodiment, as shown in FIG. 8 and FIG. 9, the first mating structure 11 may be configured as a protruding portion 111 protruding from a surface of the connecting member 10, and the second mating structure 21 may be configured as a mating groove 201. The mating groove 201 may have a first groove opening 211 directly facing the protruding portion 111. The mating groove 201 may be configured to be fitted over the protruding portion 111 through the first groove opening 211, and an upper wall of the mating groove 201 may be pressed onto the protruding portion 111 along the gravity direction X. By such configuration, a contact area between the first mating structure 11 and the second mating structure 21 can be increased, thereby making the connection between the mating member 20 and the connecting member 10 more secure.

Furthermore, as shown in FIG. 9, an outer peripheral wall of the protruding portion 111 may be provided with a restricting flange 112. The restricting flange 112 may be spaced apart from the surface of the connecting member 10. The first groove opening 211 may be provided with a rim 212 extending toward a center of the first groove opening 211, and the rim 212 may be stopped between the restricting flange 112 and the surface of the connecting member 10. By providing the rim 212 stopped between the restricting flange 112 and the surface of the connecting member 10, the mating member 20 can be prevented from being detached from the connecting member 10 along a direction perpendicular to the surface of the connecting member 10.

Furthermore, the mating groove 201 may further have a second groove opening 21 in communication with the first groove opening 211. Along the gravity direction X, the protruding portion 111 of the mating member 20 may be configured to pass through the second groove opening 213 and the first groove opening 211 sequentially and extend into the mating groove 201. By providing the second groove opening 213, the mating groove 201 can be conveniently fitted over the surface of the protruding portion 111.

The mounting structure 100 may further include a locking member 30, and the locking member 30 may be configured to prevent the mating member 20 from being detached from the connecting member 10 along an anti-gravity direction Y. For example, three types of the locking member 30 are described below. It may be understood that a specific structure of the locking member 30 may not be limited to the three types described below.

First, a first implementation of the locking member 30 may be described.

Still referring to FIG. 7 to FIG. 9, the mating member 20 may be provided with a third mating structure 22, and the locking member 30 may be movably connected to the connecting member 10. At least a portion of the locking member 30 may be movable to protrude beyond a surface of the connecting member 10 proximal to the mating member 20, and may be configured to form a stop above the third mating structure 22 along the gravity direction X. The locking member 30 may be movable to no longer protrude beyond the surface of the connecting member 10 proximal to the mating member 20, so as to release the stop between the locking member 30 and the third mating structure 22. Since the first mating structure 11 and the second mating structure 21 are cooperated with each other to prevent the mating member 20 from being detached from the connecting member 10 along the gravity direction X, by providing at least a portion of the locking member 30 to form the stop above the third mating structure 22 along the gravity direction X, the mating member 20 can be prevented from being detached from the connecting member 10 along the anti-gravity direction Y, thereby achieving complete locking of the mating member 20 and the connecting member 10. Moreover, by moving the locking member 30, the stop between the locking member 30 and the third mating structure 22 can be released, thereby unlocking the mating member 20 from the connecting member 10, and facilitating detachment of the mating member 20 from the connecting member 10.

The connecting member 10 may be provided with a through hole 12. The locking member 30 may include a main body portion 31 and a protrusion 32 connected to each other. The protrusion 32 may be configured to extend through the through hole 12 beyond the surface of the connecting member 10 proximal to the mating member 20. The main body portion 31 may be movably connected to the connecting member 10 and configured to drive the protrusion 32 to be disengaged from the through hole 12. That is, the protrusion 32 may be configured for stop mating with the third mating structure 22.

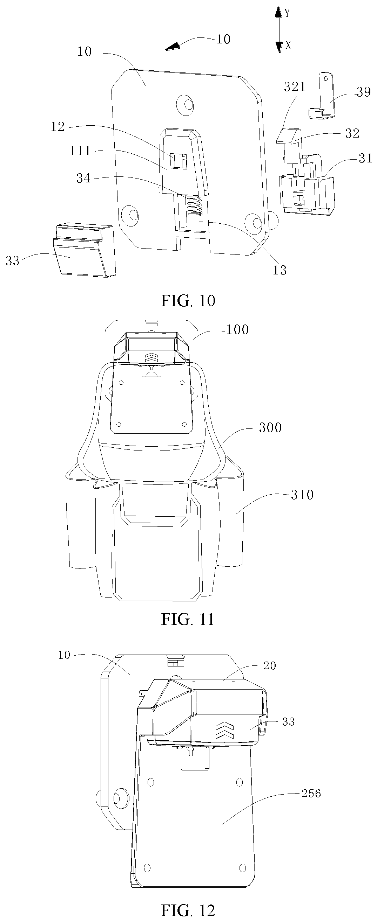

For example, as shown in FIG. 8 and FIG. 10, the through hole 12 may be formed in the protruding portion 111, and the third mating structure 22 may be configured as a clamping block 202 extending inside the mating groove 201. By such configuration, a space of the connecting member 10 along the gravity direction X can be fully utilized, thereby facilitating shortening lengths of the connecting member 10 and the corresponding mating member 20, saving materials, and reducing costs.

The locking member 30 may further include an elastic support member 39. One end of the elastic support member 39 may be connected to the connecting member 10, and the another end of the elastic support member 39 may be pressed onto the main body portion 31 along an axis of the through hole 12, such that the protrusion 32 may be maintained in a state of extending out of the through hole 12. By such configuration, under the action of the elastic support member 39, the protrusion 32 can be maintained in stop mating with the third mating structure 22, thereby improving the firmness of the connection between the mating member 20 and the connecting member 10. Specifically, the elastic support member 39 may be configured as a metal spring plate.

The protrusion 32 may be provided with a guiding inclined surface 321. When the main body 31 is moved along the anti-gravity direction Y by a preset distance, the protrusion 32 may be configured to be disengaged from the through hole 12 along the guiding inclined surface 321. The guiding inclined surface 321 may provide a guiding function, facilitating the disengagement of the protrusion 32 from the through hole 12. Specifically, when detachment of the mating member 20 is desired, only the main body portion 31 needs to be pushed along the anti-gravity direction Y, such that the protrusion 32 can be disengaged from the through hole 12 along the guiding inclined surface 321, thereby releasing the stop mating between the protrusion 32 and the third mating structure 22. Thereafter, the mating member 20 may be moved along the anti-gravity direction Y to release the limitation between the second mating structure 21 and the first mating structure 11, allowing the mating member 20 to be detached from the connecting member 10. Specifically, the guiding inclined surface 321 may be disposed above the protrusion 32.

The connecting member 10 may be provided with a sliding groove 13, and an end of the main body portion 31 away from the protrusion 32 may be slidably engaged with a sidewall of the sliding groove 13 along the gravity direction X or the anti-gravity direction Y. The sliding groove 13 may provide a guiding role, thereby enabling the main body portion 31 to slide relative to the connecting member 10 more smoothly.

The locking member 30 may further include an auxiliary pushing block 33 connected to an end of the main body portion 31 relatively away from the protrusion 32. The auxiliary pushing block 33 may be configured to drive the protrusion 32 to be disengaged from the through hole 12 when being pushed along the anti-gravity direction Y.

Specifically, the auxiliary pushing block 33 may be connected to a side of the main body portion 31 proximal to the mating member 20, and the mating member 20 may be provided with a clearance notch 27 corresponding to the auxiliary pushing block 33, through which the auxiliary pushing block 33 is exposed. By such configuration, the main body 31 can be pushed conveniently by an operator to move along the anti-gravity direction Y via the auxiliary pushing block 33.

The locking member 30 may further include a first elastic restoring member 34. One end of the first elastic restoring member 34 may be connected to an upper wall of the sliding groove 13, and another end of the first elastic restoring member 34 may be configured to elastically act on the auxiliary pushing block 33 along the gravity direction X.

Thus, when a force is applied to the auxiliary pushing block 33 by the operator to push the auxiliary pushing block 33 to move along the anti-gravity direction Y, the first elastic restoring member 34 may be compressed. When the acting force is stopped being applied to the auxiliary pushing block 33 by the operator, the auxiliary pushing block 33 may be pushed by the first elastic restoring member 34 pushes to drive the main body portion 31 to return, such that the protrusion 32 may be restored to a state where the protrusion 32 is limited in the through hole 12. The first elastic restoring member 34 may be configured as a spring.

Next, a second embodiment of the locking member 30 may be described.

Referring to FIG. 11 to FIG. 17, the connecting member 10 may be provided with a third mating structure 22, and the third mating structure 22 may be configured as a restricting hole 203. The locking member 30 may be elastic, and the locking member 30 may be fixed to the mating member 20. The locking member 30 may be configured to deform and extend into the restricting hole 203 when the mating member 20 moves relative to the connecting member 10.

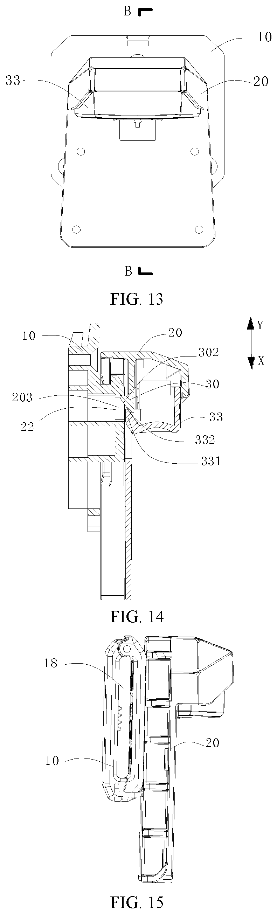

Furthermore, as shown in FIG. 14, the locking member 30 may be configured in a hook shape, thereby facilitating extension of the locking member 30 into the restricting hole 203 and forming the stop below the upper wall of the restricting hole 203 along the gravity direction X.

In an embodiment, the locking member 30 and the mating member 20 may both be made of plastic and integrally formed by injection molding.

The mounting structure 100 may further include an auxiliary pushing block 33 movably connected to the mating member 20. The auxiliary pushing block 33 may be configured to drive the locking member 30 to be deformed and disengaged from the restricting hole 203 when moving relative to the mating member 20. Thus, the operator may push the auxiliary pushing block 33 may be pushed by the operator to disengage the locking member 30 from the restricting hole 203, thereby unlocking the mating member 20 from the connecting member 10.

Furthermore, the auxiliary pushing block 33 may be provided with a mating hook 331. The mating hook 331 may be slidably connected below the locking member 30. The mating hook 331 may be configured to apply a force on the locking member 30 directed away from the connecting member 10 when sliding upward relative to the mating member 20, thereby causing the locking member 30 to be deformed and disengaged from the restricting hole 203.

Specifically, the mating hook 331 may be provided with a first inclined surface 332, and the locking member 30 may be provided with a second inclined surface 302. The first inclined surface 332 may be slidably abutted below the second inclined surface 302. Moreover, along the gravity direction, each of the first inclined surface 332 and the second inclined surface may extend in a direction away from the connecting member 10. Thus, when the mating hook 331 moves upward, the first inclined surface 332 can apply a force directed away from the connecting member 10 on the locking member 30 via the second inclined surface 302, causing the locking member 30 to be deformed and disengaged from the restricting hole 203.

Next, a third embodiment of the locking member 30 may be described.

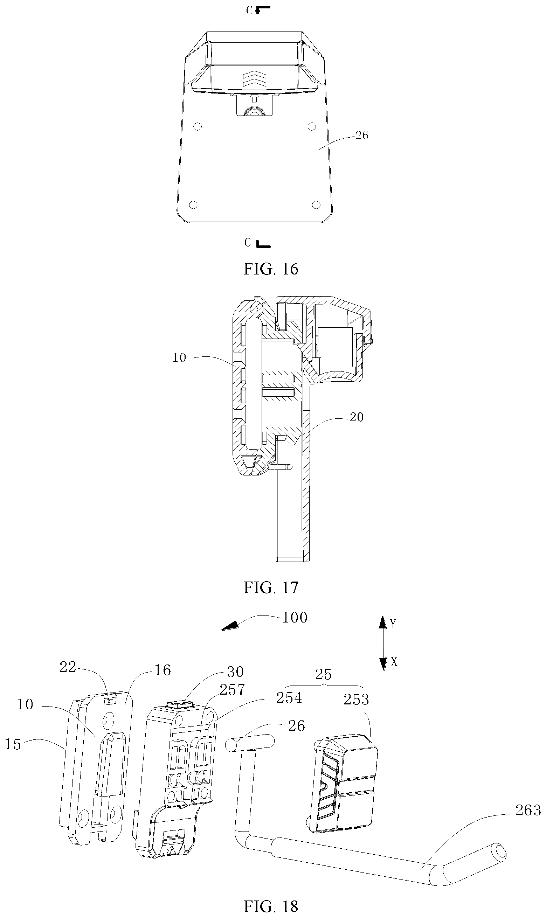

Referring to FIG. 18 to FIG. 22, the connecting member 10 may be provided with a third mating structure 22, and the locking member 30 may be movably connected to the mating member 20. At least a portion of the locking member 30 may be movable to protrude beyond a surface of the mating member 20 proximal to the connecting member 10, and configured to form a stop below the third mating structure 22 along the gravity direction X. The locking member 30 may be movable to no longer protrude beyond the surface of the mating member 20 proximal to the connecting member 10, so as to release the stop between the locking member 30 and the third mating structure 22.

The mating member 20 may have a mounting cavity 23. The mounting cavity 23 may have a first opening 231 facing the connecting member 10. The locking member 30 may be movably accommodated in the mounting cavity 23, and at least a portion of the locking member 30 may be configured to extend out through the first opening 231.

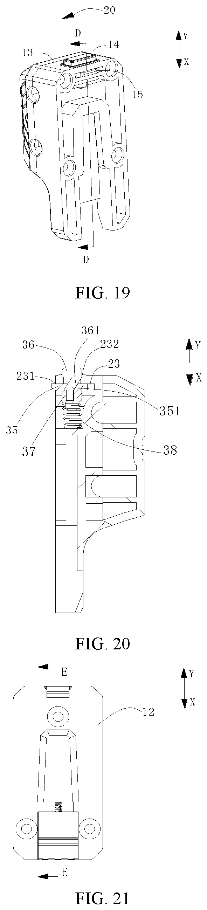

Furthermore, as shown in FIG. 20, the mounting cavity 23 may have a second opening 232 facing the anti-gravity direction Y. The locking member 30 may include a blocking plate 35 and an actuating button 36. The blocking plate 35 may extend out through the first opening 231, one end of the actuating button 36 may extend out through the second opening 232, and another end of the actuating button 36 may be movably connected to the blocking plate 35. The actuating button 36 may be configured to push the blocking plate 35 to be retracted into the mounting cavity 23 when moving along the gravity direction X.

The blocking plate 35 may be configured to form a stop below the third mating structure 22 along the gravity direction X. When an operator presses the actuating button 36 along the gravity direction X, the actuating button 36 may be configured to drive the blocking plate 35 to move into the mounting cavity 23 until the blocking plate 35 no longer extends out of the first opening 231, thereby releasing the stop between the blocking plate 35 and the third mating structure 22. That is, unlocking the mating member 20 from the connecting member 10 can be achieved by pressing the actuating button 36 downward.

A sidewall of the actuating button 36 away from the first opening 231 may be configured as an actuating inclined surface 361. The blocking plate 35 may be provided with a perforation 351. The actuating button 36 may extend through the perforation 351, and the actuating inclined surface 361 may be pressed onto an inner wall of the perforation 351. The actuating inclined surface 361 may be configured to apply a force on the inner wall of the perforation 351 directed from the first opening 231 toward the mounting cavity 23 when moving along the gravity direction X. By providing the actuating inclined surface 361, the movement of the actuating button 36 along the gravity direction X may be converted into the movement of the blocking plate 35 toward the interior of the mounting cavity 23.

The locking member 30 may further include a blocking block 37 connected to the actuating button 36 and stopped below the blocking plate 35 along the gravity direction X. Thus, the blocking block 37 can prevent the actuating button 36 from escaping from the second opening 232 along the anti-gravity direction Y.

Furthermore, the locking member 30 may further include a second elastic restoring member 38. One end of the second elastic restoring member 38 may be connected to a bottom wall of the mounting cavity 23, and another end of the second elastic restoring member 38 may be configured to elastically act on the blocking block 37 along the anti-gravity direction Y. The second elastic restoring member 38 may apply a force on the blocking plate 35 in the anti-gravity direction Y by abutting against the blocking block 37, thereby maintaining the blocking plate 35 in a state where the blocking plate 35 is limited within the mounting cavity 23.

The connecting member 10 may have at least one mounting surface 15 and at least one mating surface 16. The mounting surface 15 may be configured to be connected to the load-bearing structure 200, and the mating surface 16 may be configured to be connected to the mating member 20.

In an embodiment, as shown in FIG. 18, the connecting member 10 may have a mounting surface 15 and a mating surface 16 disposed away from each other. In this embodiment, each connecting member 10 may be correspondingly mounted with one mating member 20, and the load-bearing structure 200 and the mating member 20 may be located on two opposite sides of the connecting member 10, such that the structure of the connecting member 10 is more compact.

In another embodiment, the connecting member 10 may include a plurality of mating surfaces 16, such that a plurality of mating members 20 may be mounted on the same connecting member 10, simultaneously.

In another embodiment, the connecting member 10 may have a plurality of mounting surfaces 15, and the plurality of mounting surfaces 15 may be adapted for different load-bearing structures 200, thereby allowing the connecting member 10 to be switched among the plurality of load-bearing structures 200.

The mating member 20 may include adapter portions 25 and functional portions 26, and the functional portions 26 are connected to the adapter portions 25 and connected to the connecting member 10 via the adapter portions 25.

The functional portions 26 may be detachably connected to the adapter portions 25. Thus, the functional portions 26 can be detached from the adapter portions 25, such that the functional portions 26 can be replaced according to actual usage requirements.

Referring to FIG. 8, each of the adapter portions 25 may be provided with at least one set of clamping assemblies 251, each set of the at least one set of clamping assemblies 251 may include two clamping arms 251a spaced apart and opposite to each other, and the two clamping arms 251a may be configured to clamp corresponding one of the functional portions 26. The clamping arms 251a are elastic, thereby facilitating the clamping of the functional portion between the corresponding set of clamping arms 251a.

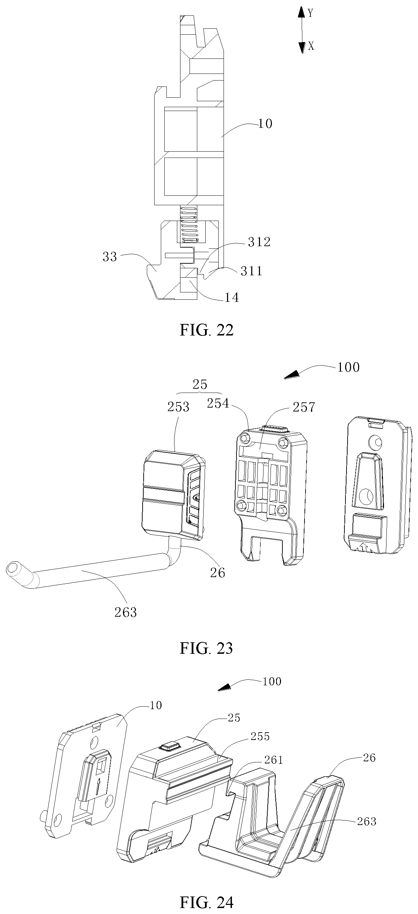

Referring to FIG. 18 and FIG. 23, the connecting portion 25 may be provided with a mounting groove 257, and a functional portion 26 may be snap-fitted into the mounting groove 257. A portion of the functional portion 26 located in the mounting groove 257 may be configured in an elongated shape to increase a contact area between the functional portion 26 and the mounting groove 257.

Each of the adapter portions 25 may have a mounting hole 252, and corresponding one of the functional portions 26 may be configured to pass through the mounting hole 252.

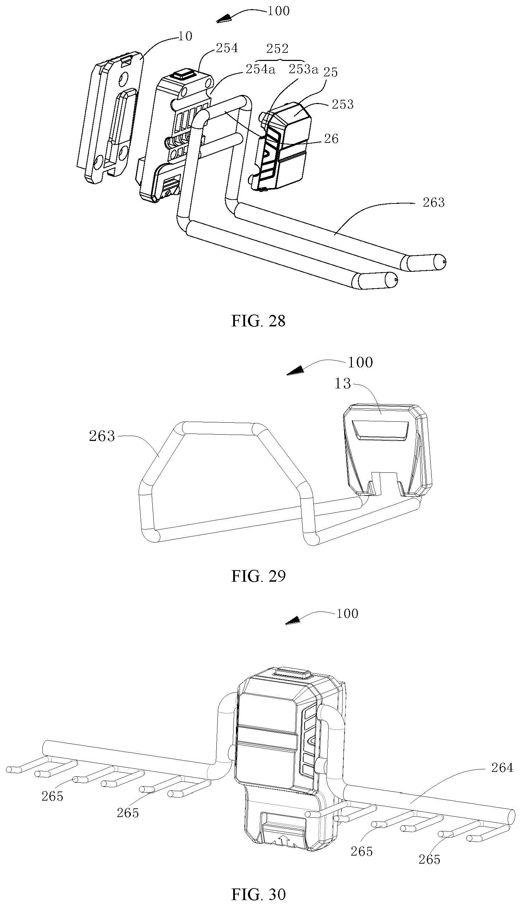

Specifically, referring to FIG. 28, each of the adapter portions 25 may include a front cover 253 and a rear cover 254 detachably connected to each other. The rear cover 254 may be located between the front cover 253 and the connecting member 10. The front cover 253 may be provided with a first groove 253a, and the rear cover 254 may be provided with a second groove 254a. The mounting hole 252 may be defined by the second groove 254a and the first groove 253a.

Referring to FIG. 24, a surface of each of the adapter portions 25 may be provided with a clamping groove 255, corresponding one of the functional portions 26 may be provided with a clamping hook 261, and the clamping hook 261 may be clamped in the clamping groove 255.

Each of the functional portions 26 may be correspondingly connected to at least one of the adapter portions 25.

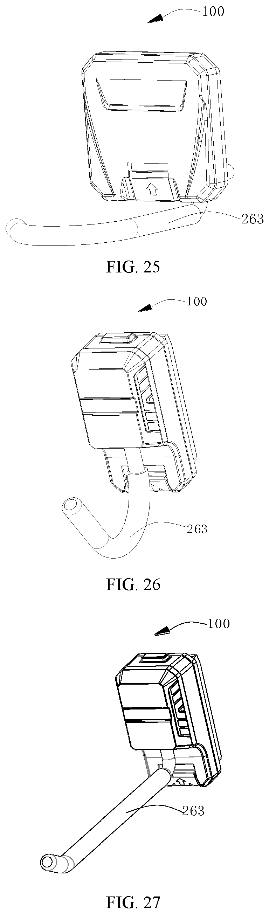

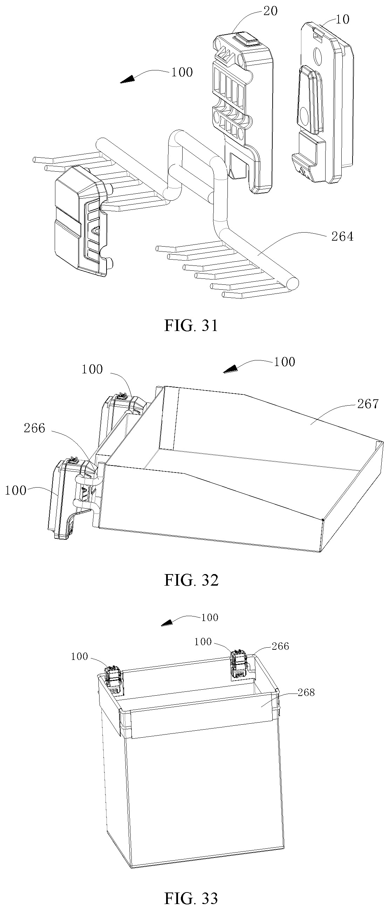

For example, in the embodiments shown in FIG. 7 to FIG. 31, each of the functional portions 26 may be correspondingly connected to one of the adapter portions 25. In the embodiments shown in FIG. 32 to FIG. 34, the functional portion 26 may be provided relatively large, and the plurality of connecting portions 25 together support the same functional portion 26.

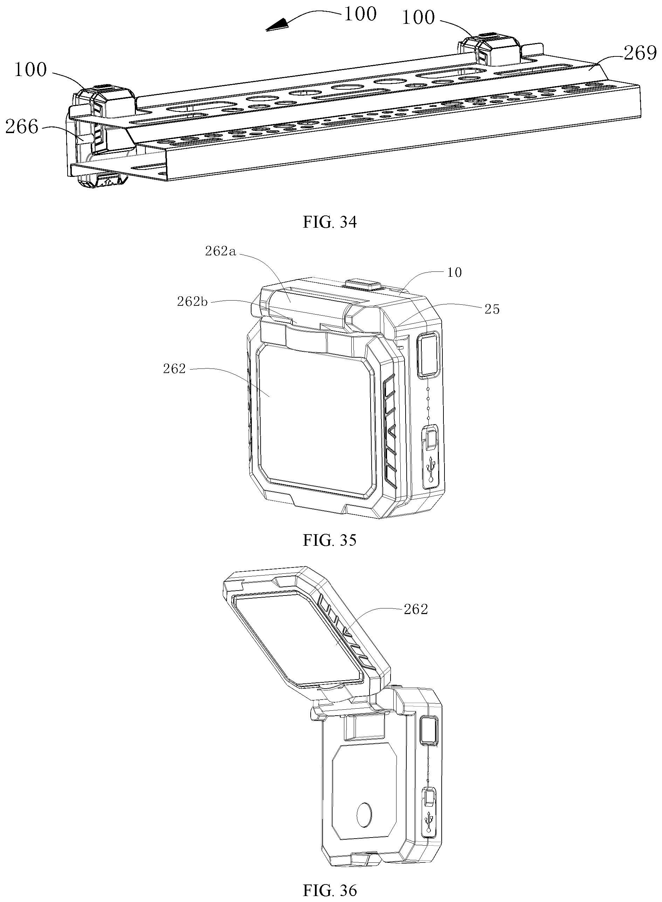

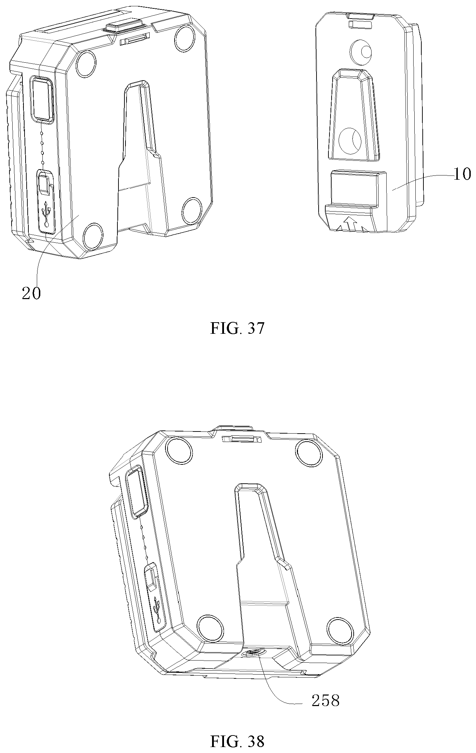

The functional portion 26 may be movably connected to the adapting portion 25. By such configuration, a position of the functional portion 26 relative to the adapter portion 25 can be adjusted according to usage requirements. For example, referring to FIG. 35 to FIG. 38, the functional portion 26 may be configured as a lamp 262, and the lamp 262 may be hinged to the adapter portion 25.

The functional portions 26 may be non-detachably connected to the adapter portions 25.

In an embodiment, the functional portions 26 may be non-detachably connected to the adapter portions 25 by means of adhesive bonding, riveting, or the like.

The functional portion 26 may also be integrally provided with the adapter portion 25. For example, in FIG. 12, the functional portion 26 may be configured as a functional flat surface 256 on the adapter portion 25. The functional flat surface 256 may be configured for mounting a tool bag 310. The functional flat surface 256 may also be configured for adhesively attaching a to-be-mounted article.

Furthermore, as shown in FIG. 13, the connecting member 10 in FIG. 11 may be configured in a form of the connecting member 10 shown in FIG. 7 to FIG. 10, or may be configured in a form of the connecting member 10 shown in FIG. 15 to FIG. 17. In FIG. 15 to FIG. 17, the connecting member 10 may be provided with a mating hole 18, and the connecting member 10 may be movably sleeved on an outer periphery of the mounting structure 100 through the mating hole 18. Specifically, the mounting structure 100 may be configured as a belt (not shown), such that the connecting member 10 may be slidably mounted on the belt.

Several specific embodiments are described below to illustrate functions of the functional portion 26.

Referring to FIG. 18 to FIG. 29, the functional portion 26 may be configured as a hanging hook 263 configured for hanging a to-be-mounted article 300.

As shown in FIG. 18 to FIG. 27, the hanging hook 263 may be configured as a single hanging hook 263. The single hanging hook 263 may extend out from below the adapter portion 25. Alternatively, the hanging hook 263 may be directly connected to a side surface of the adapter portion 25 away from the connecting member 10.

As shown in FIG. 28 to FIG. 29, the hanging hook 263 may also be configured as a double hook.

Referring to FIG. 30 to FIG. 31, the functional portion 26 may be configured as a hanger 264. The hanger 264 may be provided with a plurality of hook bodies 265 spaced apart with each other. The plurality of hook bodies 265 may be configured to expand a hanging space of the hanger 264, thereby allowing hanging of more to-be-mounted articles.

Referring to FIG. 32 to FIG. 34, the functional portion 26 may be configured as a frame structure 266. At least two adapter portions 25 may be correspondingly connected to one frame structure 266. The frame structure 266 may be configured to mount a tray 267, a ball basket 268, or the sheet metal bracket 269.

Referring to FIG. 35 to FIG. 38, the functional portion 26 may be configured as a lamp 262. The lamp 262 may be hinged to one side of the adapter portion 25 via a hinge shaft 262a, and the lamp 262 can be flipped 270° relative to the adapter portion 25. The lamp 262 may be rotatably connected to the hinge shaft 262a via a pivot shaft 262b, and the lamp 262 can rotate 360° relative to the adapter portion25. Therefore, it may be convenient for a user to adjust an illumination angle of the lamp 262 according to usage requirements.

Furthermore, an interface 258 may be provided below the adapter portion 25, and the interface 258 may be configured for insertion of a tripod, such that the lamp 262 can be mounted on the tripod for use.

Referring to FIG. 1 to FIG. 6 again, the present application may further provides a storage system 1. The storage system 1 may include the load-bearing structure 200 and the mounting structure 100 according to the embodiments above.

The connecting member 10 of the mounting structure 100 may be fixed to the load-bearing structure 200.

In an embodiment, as shown in FIG. 1, the load-bearing structure 200 may be configured as a load-bearing plate 210, and the connecting member 10 may be screwed onto the load bearing plate 210 by screws 250. Alternatively, as shown in FIG. 3, the load-bearing structure 200 may be configured as a box body 240, and the connecting member 10 may be connected to the box body 240 by the screws 250.

The connecting member 10 may also be directly adhesively fixed to the load-bearing structure 200.

The connecting member 10 of the mounting structure 100 may be detachably connected to the load-bearing structure 200.

The mounting structure 100 may be movably mounted to the load-bearing structure 200. By such configuration, it is convenient to adjust the mounting position of the mounting structure 100 relative to the load-bearing structure 200.

In an embodiment, as shown in FIG. 1, FIG. 2, and FIG. 9, the load-bearing structure 200 may include a guide rail 220, two opposite ends of the mounting structure 100 may each be provided with a through slot 14, and two edges of the guide rail 220 may slidably engaged in the two through slots 14, respectively. Thus, the mounting structure 100 can slide along the extension direction of the guide rail 220. The through slots 14 may be formed in the connecting member 10.

In an embodiment, the guide rail 220 may be fixed to the load-bearing plate 210 by the screws 250. That is, the guide rail 220 can be used in cooperation with the load-bearing plate 210.

Furthermore, as shown in FIG. 2 and FIG. 9, along an extension direction of the guide rail 220, each of the two edges of the guide rail 220 may be provided with a plurality of positioning holes 260 spaced apart. At least one of the two through slots 14 may be provided with a lock pining 312, and the lock pin 312 may be configured to be inserted into any one of the positioning holes 260 to position and mount the mounting structure 100 to the guide rail 220. Thus, when the mounting structure 100 slides along the guide rail 220 to a certain positioning hole 260, the mounting structure 100 can be locked onto the guide rail 220 by inserting the locking pin 312 into the positioning hole 260.

For example, referring still to FIG. 9, an end of the main body portion 31 away from the protrusion 32 may be provided with a restricting block 311. The restricting block 311 may be spaced apart from the connecting member 10, and a through slot 14 may be formed between the restricting block 311 and the connecting member 10. The through slot 14 may be configured to be slidingly engaged with the load-bearing structure 200. By such configuration, the main body portion 31 may be configured to drive the protrusion 32, and form a through slot 14 in cooperation with the connecting member 10 for sliding engagement with the guide rail 220.

Furthermore, the restricting block 311 may be provided with a locking pin 312, and the locking pin 312 may be movable, following the auxiliary pushing block 33, into plug-in engagement with the positioning hole 260 on the load-bearing structure 200.

Specifically, when the main body portion 31 is driven by the auxiliary pushing block 33 to move upward along the anti-gravity direction Y by a preset distance, the locking pin 312 may move upward along the anti-gravity direction Y with the main body portion 31, so as to be disengaged from the positioning hole 260, thereby locking the mounting structure 100 onto the guide rail 220. Thus, the mounting structure 100 can continue to slide along the extension direction of the guide rail 220 to adjust the position of the mounting structure 100.

As shown in FIG. 22, the restricting block 311 may also be separately provided. The restricting block 311 may be slidably connected to the connecting member 10 along the gravity direction X or the anti-gravity direction Y, and a through slot 14 may be formed between the restricting block 311 and the connecting member 10. The locking pin 312 may be connected to the restricting block 311 and can slide relative to the connecting member 10 together with the restricting block 311.

As shown in FIG. 2, the guide rail 220 may include a plurality of segments. Two ends of each segment of the guide rail 220 along the extension direction of the segment may each be provided with a hanging structure 221, and adjacent two segments of the guide rail 220 may be configured to be spliced and extended via the hanging structure 221. Thus, the length of the guide rail 220 can be increased or decreased according to actual needs, and transportation of the guide rail 220 can be facilitated. The guide rail 220 may also be formed as a single piece which cannot be spliced.

Specifically, the hanging structure 221 may include a hooking portion 222 and a hole portion 223. One end of each segment of the guide rail 220 may be provided with the hooking portion 222, and another end of each segment of the guide rail 220 may be provided with the hole portion223. The hooking portion 222 can be inserted into the hole portion 223 to connect adjacent two segments of the guide rail 220.

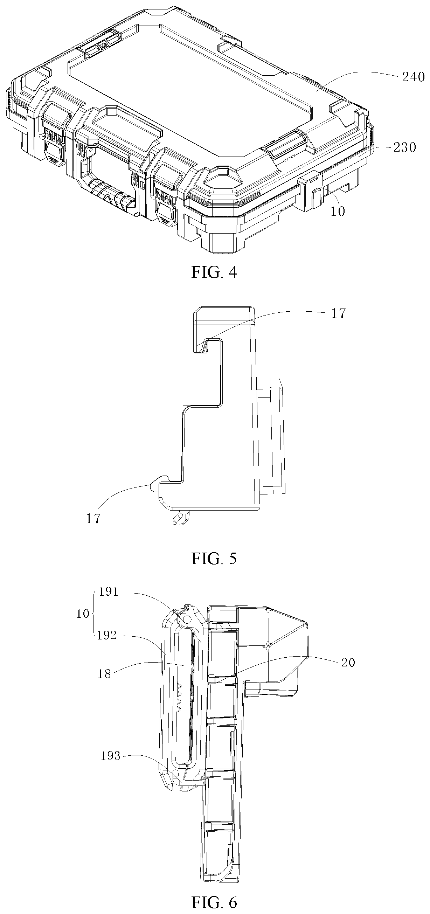

Referring to FIG. 4, the load-bearing structure may be configured as a box body 240. The load-bearing structure 200 may be provided with a hanging strip 230, and the connecting member 10 may be provided with a snap-fit hook 17. The snap-fit hook 17 may be slidably engaged with the hanging strip 230. By such configuration, the position of the connecting member 10 on the load-bearing structure 200 can be freely adjusted.

Furthermore, the number of the snap-fit hooks 17 may be two. The two snap-fit hooks 17 may be spaced apart and configured to clamp an upper edge and a lower edge of the hanging strip 230, respectively. Thus, the firmness of the connection between the connecting member 10 and the hanging strip 230 can be improved.

Furthermore, at least one of the snap-fit hooks 17 may be elastic. The snap-fit hook 17 can be released form the upper edge or the lower edge of the hanging strip 230 by bending the snap-fit hook 17, such that the connecting member 10 can be conveniently detached from the hanging strip 230.

Referring to FIG. 6, the connecting member 10 may be provided with a mating hole 18, and the connecting member 10 may be movably sleeved on an outer periphery of the mounting structure 100 through the mating hole 18. In this embodiment, the mounting structure 100 may be configured as a belt (not shown), such that the connecting member 10 can be slidably mounted on the belt.

Furthermore, the connecting member 10 may include a fixed portion 191 and a movable portion 192. The fixed portion 191 may be configured to be connected to the mating member 20. One end of the movable portion 192 may be hinged to the fixed portion 191, and another end of the movable portion 192 may be configured to be connected to the fixed portion. The mating hole 18 may be defined by a middle portion of the movable portion 192 and a middle portion of the fixed portion 191. Thus, by flipping the movable portion 192, the mating hole 18 can be opened, allowing the connecting member 10 to be detached from the belt.

Moreover, the connecting member 10 may further include a locking portion 193 configured to lock the movable portion 192 and the fixed portion 191.

In an embodiment, the locking portion 193 may be connected to the movable portion 192 and rotatable relative to the movable portion 192. When the movable portion 192 is rotated to abut against the fixed portion 191, the movable portion 192 and the fixed portion 191 can be sleeved and locked by flipping the locking portion 193.

The various technical features of the embodiments described above can be combined arbitrarily. For brevity of description, not all possible combinations of the technical features in the above embodiments have been described. However, these combinations of technical features should be construed as falling within the scope of the specification as long as no contradiction occurs.

The embodiments described above only represent several implementations of the present application. The description thereof is relatively specific and detailed, but should not be construed as limiting the scope of the present application. It should be noted that, for those skilled in the art, several modifications and improvements may be made without departing from the concept of the present application, which all fall within the protection scope of the present application. Therefore, the protection scope of the present application shall be defined by the appended claims.

## Claims

1. A mounting structure configured to be mounted on a load-bearing structure, **characterized by** comprising,
a connecting member; and
a mating member connected to the load-bearing structure via the connecting member, and the mating member is configured to carry a to-be-mounted article.

2. The mounting structure of claim 1, wherein the mating member is non-detachably connected to the connecting member.

3. The mounting structure of claim 1, wherein the mating member is detachably connected to the connecting member.

4. The mounting structure of claim 3, wherein the connecting member is provided with a first mating structure, the mating member is provided with a second mating structure, and at least a portion of the second mating structure is pressed onto the first mating structure along a gravity direction X to prevent the mating member from being detached from the connecting member along the gravity direction X.

5. The mounting structure of claim 4, wherein the first mating structure is configured as a protruding portion protruding from a surface of the connecting member, the second mating structure is configured as a mating groove, the mating groove comprises a first groove opening directly facing the protruding portion, the mating groove is configured to be fitted over the protruding portion through the first groove opening, and an upper wall of the mating groove is pressed onto the protruding portion along the gravity direction X.

6. The mounting structure of claim 5, wherein an outer peripheral wall of the protruding portion is provided with a restricting flange, the restricting flange is spaced apart from the surface of the connecting member, the first groove opening is provided with a rim extending toward a center of the first groove opening, and the rim is stopped between the restricting flange and the surface of the connecting member.

7. The mounting structure of claim 6, wherein the mating groove further comprises a second groove opening in communication with the first groove opening; and
along the gravity direction X, the protruding portion of the mating member is configured to pass through the second groove opening and the first groove opening sequentially and extend into the mating groove.

8. The mounting structure of claim 3, further comprising a locking member, wherein the locking member is configured to prevent the mating member from being detached from the connecting member along an anti-gravity direction Y.

9. The mounting structure of claim 8, wherein the mating member is provided with a third mating structure, the locking member is movably connected to the connecting member; and
at least a portion of the locking member is movable to protrude beyond a surface of the connecting member proximal to the mating member, and is configured to form a stop above the third mating structure along a gravity direction X; and the locking member is movable to not protrude beyond the surface of the connecting member proximal to the mating member r, so as to release the stop between the locking member and the third mating structure.

10. The mounting structure of claim 9, wherein the connecting member is provided with a through hole; and
the locking member comprises a main body portion and a protrusion connected to each other, the protrusion is configured to extend through the through hole beyond the surface of the connecting member proximal to the mating member; and the main body portion is movably connected to the connecting member and is configured to drive the protrusion to be disengaged from the through hole.

11. The mounting structure of claim 10, wherein the locking member further comprises an elastic support member, one end of the elastic support member is connected to the connecting member, and another end of the elastic support member is pressed onto the main body portion along an axis of the through hole, such that the protrusion is maintained in a state of extending out of the through hole.

12. The mounting structure of claim 10, wherein the protrusion is provided with a guiding inclined surface; and when the main body portion is moved along the anti-gravity direction Y by a preset distance, the protrusion is configured to be disengaged from the through hole along the guiding inclined surface.

13. The mounting structure of claim 12, wherein the connecting member is provided with a sliding groove, and an end of the main body portion away from the protrusion is slidably engaged with a sidewall of the sliding groove along the gravity direction X or the anti-gravity direction Y.

14. The mounting structure of claim 13, wherein the locking member further comprises
an auxiliary pushing block connected to an end of the main body portion relatively away from the protrusion; and
the auxiliary pushing block is configured to drive the protrusion to be disengaged from the through hole when being pushed along the anti-gravity direction Y.

15. The mounting structure of claim 14, wherein the locking member further comprises a first elastic restoring member, one end of the first elastic restoring member is connected to an upper wall of the sliding groove, and another end of the first elastic restoring member is configured to elastically act on the auxiliary pushing block along the gravity direction X.

16. The mounting structure of claim 14, wherein the end of the main body portion away from the protrusion is provided with a restricting block, the restricting block is spaced apart from the connecting member, and a through slot is formed between the restricting block and the connecting member, the through slot is configured to be in sliding engagement with the load-bearing structure.

17. The mounting structure of claim 16, wherein the restricting block is provided with a locking pin, and the locking pin is movable into plug-in engagement with the load-bearing structure following the auxiliary pushing block.

18. The mounting structure of claim 10, wherein the connecting member is provided with a first mating structure, the mating member is provided with a second mating structure, and at least a portion of the second mating structure is pressed onto the first mating structure along the gravity direction X to prevent the mating member from being detached from the connecting member along the gravity direction X;
the first mating structure is configured as a protruding portion protruding from a surface of the connecting member, the second mating structure is configured as a mating groove, the mating groove comprises a first groove opening directly facing the protruding portion, the mating groove is configured to be fitted over the protruding portion through the first groove opening, and an upper wall of the mating groove is pressed onto the protruding portion along a gravity direction X; and
the through hole is provided on the protruding portion, and the third mating structure is configured as a clamping block extending inside the mating groove.

19. The mounting structure of claim 8, wherein the connecting member is provided with a third mating structure, and the locking member is movably connected to the mating member; and
at least a portion of the locking member is movable to protrude beyond a surface of the mating member proximal to the connecting member, and is configured to form a stop below the third mating structure along a gravity direction X; and the locking member is movable not to protrude beyond the surface of the mating member proximal to the connecting member, so as to release the stop between the locking member and the third mating structure.

20. The mounting structure of claim 19, wherein the mating member comprises a mounting cavity, the mounting cavity comprises a first opening facing the connecting member, the locking member is movably accommodated in the mounting cavity, and at least a portion of the locking member is configured to extend out through the first opening.

21. The mounting structure of claim 20, wherein the mounting cavity comprises a second opening facing the anti-gravity direction Y; the locking member comprises a blocking plate and an actuating button, the blocking plate extends out through the first opening, one end of the actuating button extends out through the second opening, and another end of the actuating button is movably connected to the blocking plate; and
the actuating button is configured to drive the blocking plate to retract into the mounting cavity when moving along the gravity direction X.

22. The mounting structure of claim 21, wherein a sidewall of the actuating button away from the first opening is configured as an actuating inclined surface, the blocking plate is provided with a perforation, the actuating button extends through the perforation, and the actuating inclined surface is pressed onto an inner wall of the perforation;
the actuating inclined surface is configured to apply a force on the inner wall of the perforation directed from the first opening toward the mounting cavity when moving along the gravity direction X.

23. The mounting structure of claim 22, wherein the locking member further comprises a blocking block connected to the actuating button and stopped below the blocking plate along the gravity direction X.

24. The mounting structure of claim 23, wherein the locking member further comprises a second elastic restoring member, one end of the second elastic restoring member is connected to a bottom wall of the mounting cavity, and another end of the second elastic restoring member is configured to elastically act on the blocking block along the anti-gravity direction Y.

25. The mounting structure of claim 8, wherein the connecting member is provided with a third mating structure, the third mating structure is configured as a restricting hole, the locking member is configured as elastic, and the locking member is fixed to the mating member; and
the locking member is configured to deform and extend into the restricting hole when the mating member moves relative to the connecting member.

26. The mounting structure of claim 25, further comprising an auxiliary pushing block movably connected to the mating member, wherein
the auxiliary pushing block is configured to drive the locking member to deform and disengage from the restricting hole when moving relative to the mating member.

27. The mounting structure of claim 1, wherein the mating member comprises an adapter portion and a functional portion, and the functional portion is connected to the adapter portion and connected to the connecting member via the adapter portion.

28. The mounting structure of claim 27, wherein the functional portion is detachably connected to the adapter portion.

29. The mounting structure of claim 28, wherein adapter portion is provided with at least one set of clamping assemblies, each set of the at least one set of clamping assemblies comprises two clamping arms spaced apart and opposite to each other, and the two clamping arms are configured to clamp the functional portion.

30. The mounting structure of claim 28, wherein adapter portion comprises a mounting hole, and the functional portion is configured to pass through the mounting hole.

31. The mounting structure of claim 30, wherein adapter portion comprises a front cover and a rear cover detachably connected to each other, the rear cover is located between the front cover and the connecting member, the front cover is provided with a first groove, the rear cover is provided with a second groove, and the mounting hole is enclosed by the second groove and the first groove.

32. The mounting structure of claim 28, wherein a surface of adapter portion is provided with a clamping groove, corresponding one of the functional portions is provided with a clamping hook, and the clamping hook is clamped in the clamping groove.

33. The mounting structure of claim 27, wherein each of the functional portions is correspondingly connected to at least one of the adapter portions.

34. The mounting structure of claim 1, wherein the connecting member comprises at least one mounting surface and at least one mating surface, the mounting surface is configured to connect to the load-bearing structure, and the mating surface is configured to connect to the mating member.

35. The mounting structure of claim 34, wherein the connecting member comprises one mounting surface and one mating surface, and the mounting surface and the mating surface are disposed away from each other.

36. A storage system, **characterized by** comprising a load-bearing structure and the mounting structure of any one of claims 1 to 35.

37. The storage system of claim 36, wherein the connecting member of the mounting structure is fixed to the load-bearing structure.

38. The storage system of claim 36, wherein the connecting member of the mounting structure is movably mounted to the load-bearing structure.

39. The storage system of claim 38, wherein the load-bearing structure comprises a guide rail, each of two opposite ends of the mounting structure is provided with a through slot, respectively, and two edges of the guide rail are slidably engaged in the two through slots, respectively.

40. The storage system of claim 39, wherein along an extension direction of the guide rail, each of the two edges of the guide rail is provided with a plurality of positioning holes spaced apart from each other, at least one of the two through slots is provided with a locking pin, and the locking pin is configured to be inserted into any one of the plurality of positioning holes to position and mount the mounting structure to the guide rail.

41. The storage system of claim 40, wherein the guide rail comprises a plurality of segments, two ends of each segment of the guide rail along an extension direction of the segment are each provided with a hanging structure, and adjacent segments of the guide rail are configured to be spliced and extended via the hanging structure.

42. The storage system of claim 38, wherein the load-bearing structure is provided with a hanging strip, the connecting member is provided with a snap-fit hook, and the snap-fit hook is slidably engaged with the hanging strip.

43. The storage system of claim 37, wherein the connecting member is provided with a mating hole, and the connecting member is movably sleeved on an outer periphery of the mounting structure through the mating hole.
